(19) Europäisches Patentamt
European Patent Office
Office européen des brevets

(11) **EP 3 163 256 B1**

(12) **EUROPEAN PATENT SPECIFICATION**

(45) Date of publication and mention
of the grant of the patent:
**04.12.2019 Bulletin 2019/49**

(51) Int Cl.:
**G01D 5/14** *(2006.01)*      **G01D 5/245** *(2006.01)*
**G01D 5/16** *(2006.01)*

(21) Application number: **15191500.6**

(22) Date of filing: **26.10.2015**

(54) **MAGNETIC ANGLE SENSOR COMPRISING TWO CONCENTRIC RINGS OF COPRIME MAGNETIC SPIRAL PORTIONS**

WINKELSENSOR

CAPTEUR D'ANGLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.05.2017 Bulletin 2017/18**

(73) Proprietors:
• **TE Connectivity Germany GmbH**
  **64625 Bensheim (DE)**
• **TE Connectivity Sensors Germany GmbH**
  **44227 Dortmund (DE)**

(72) Inventors:
• **WOLF, Marco**
  **D-76879 Hochstadt (DE)**

• **RIEDER, Martin**
  **D-67105 Schifferstadt (DE)**
• **LUDWIG, Michael**
  **D-68159 Mannheim (DE)**
• **MEISENBERG, Armin**
  **D-44227 Dortmund (DE)**
• **BARTOS, Axel**
  **D-45731 Waltrop (DE)**

(74) Representative: **Grünecker Patent- und Rechtsanwälte PartG mbB Leopoldstraße 4 80802 München (DE)**

(56) References cited:
**EP-A2- 2 302 333      WO-A1-2014/131434**
**DE-A1- 10 038 296      DE-B3-102008 008 377**

## Description

The present invention relates to an angular sensor for determining the absolute angular position of a rotating axis, particularly of the rotor of an electrical engine, comprising a disc with two scannable magnetic patterns and two magnetic sensors arranged near the disc, for scanning the two magnetic patterns.

Patent document WO 2014/131434 relates to an angle sensor for determining an absolute angle signal of a first part rotated with respect to a second part. The angle sensor comprises a first grating ring for generating a first signal representative of a relative position of a first sensor along a corresponding ring segment of the first grating ring. The angle sensor further comprises a second grating ring for generating a second signal representative of a relative position of a second sensor along the corresponding ring segment of the second grating ring. The first plurality and the second plurality are coprime numbers and a difference between the first plurality and the second plurality being larger than 1.

Patent document DE 10 2008 008 377 B3 relates to a measure that has a structure which is detected by a sensor and comprising a geometrically changing pattern. A carrier body is provided for the structure. The structure and the carrier body are formed by a common component such as injection molding part or plastic part. The component is formed by a material containing magnetizable substance such as powder with strontium hexaferrite, neodymium-iron-boron substance or barium hexaferrite. The detected structure is magnetized. The structure consists of two rings.

Patent document EP 2 302 333 A2 discusses an encoder including a disc-shaped disk disposed so as to be rotatable about a rotation axis and having at least one ring-shaped track in which a rotating grating is formed and at least one fixed grating which is fixedly disposed opposed to the disk so that the fixed grating and the rotating grating construct a diffraction interference optical system. Each of a plurality of slits included in the at least one rotating grating is formed along a curved line obtained by making each of a plurality of radial lines using the rotation axis as a center curved in the circumferential direction at a predetermined curve degree so that a pitch of the slits can be set to a predetermined value.

An angular sensor for determining the absolute angular position of a rotating axis is disclosed in DE 100 38 296 A1 and DE 10 2005 042 616 A1. This angular sensor comprises a disc with two magnetic patterns that can be scanned by magnetic sensors, e.g. Hall sensors. Each pattern includes Archimedean spiral sections uniformly distributed in a ring. The number of spirals sections in the two rings differs by one.

As the number of spirals sections in the two rings differs only by one, these known angular sensors require a high number of spirals section in each ring in order to achieve a desired accuracy of the angular position determination. However, a high number of spiral sections in a ring implies a decreased distance between adjacent spiral sections, which raises the production costs and makes the measurement prone to external magnetic stray fields.

## SUMMARY OF INVENTION

Therefore, it is an objective of the present invention to provide for an angular sensor which can be produced at low cost.

This objective is achieved by the features as set forth in claim 1. Further advantageous embodiments of the present invention are set forth in the dependent claims.

The gist of the present invention is that the number of spirals in a ring can be significantly decreased if the number of spirals N1 in one ring of the two rings and the number of spirals N2 in the other ring of the two rings are coprime, and the number N1 is different from the numbers N2-1 and N2+1.

The angular sensor of the present invention can be produced on a semiconductor basis, which is particularly cost-effective. Also, the angular sensor of the present invention is suitable for hollow shaft applications, and is less prone to external magnetic stray fields than the above-mentioned known angular sensors. This makes the angular sensor of the present invention magnetically robust and accurate in determining the absolute angular position.

## BRIEF DESCRIPTION OF DRAWINGS

Fig. 1 shows the principle geometrical structure of the disc used in an angle sensor according to a first embodiment of the present invention;

Fig. 2a shows a first structure of the spirals;

Fig. 2b shows a second structure of the spirals;

Fig. 2c shows a third structure of the spirals;

**Fig. 2d** shows the section of the disc shown in Fig. 2c, including the two magnetic sensors;

**Fig. 3** shows the orientation of the four magneto-resistive layers of a magneto-resistive bridge (used as magnetic sensor) relative to the radius of the disc used in an angle sensor, according to the present invention;

**Fig. 4a** shows a first arrangement of the four magneto-resistive layers of the magneto-resistive bridge relative to a magnetic pattern;

**Fig. 4b** shows a second arrangement of the four magneto-resistive layers of the magneto-resistive bridge relative to a magnetic pattern;

**Fig. 5** shows the principle geometrical structure of the disc used in an angle sensor according to a second embodiment of the present invention;

**Fig. 6** shows the principle geometrical structure of the disc used in an angle sensor according to a third embodiment of the present invention.

The angle sensor according to the present invention comprises a disc with two scannable magnetic patterns fixedly attached to a side of the disc, and two magnetic sensors fixedly arranged relative to each other. The disc and the two magnetic sensors are rotatable relative to each other, with respect to the symmetry/rotation axis of the disc. For instance, when the angle sensor is used in an electrical engine, the disc is concentrically fixed to the rotating axis of the electrical engine, so as to be rotatable relative to the two magnetic sensors, which are fixedly arranged on the housing of the electrical engine via a support. A first magnetic sensor of the two magnetic sensors is associated to a first magnetic pattern of the two magnetic patterns, faces (a portion of) the first magnetic pattern so as to be able to scan/sense the magnetic field generated by the first magnetic pattern, and is adapted to output a first electric signal corresponding to the sensed magnetic field, when the first magnetic pattern and the first magnetic sensor rotate relative to each other. A second magnetic sensor of the two magnetic sensors is associated to a second magnetic pattern of the two magnetic patterns, faces (a portion of) the second magnetic pattern so as to be able to scan/sense the magnetic field generated by the second magnetic pattern, and is adapted to output a second electric signal corresponding to the sensed magnetic field, when the second magnetic pattern and the second magnetic sensor rotate relative to each other. Magneto-resistive sensors (XMR-sensors), preferably anisotropic magneto-resistive bridges (AMR-bridges), are used for the first and/or second magnetic sensor.

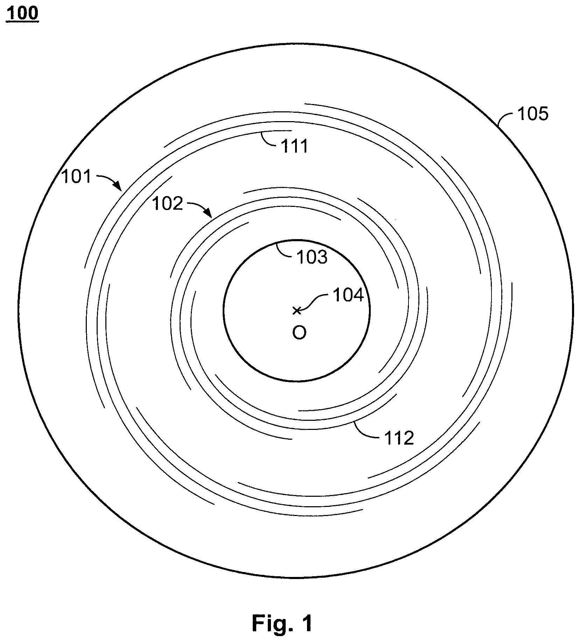

Referring now to FIG. 1, a disc used in an angle sensor according to a first embodiment of the present invention, is shown.

Fig. 1 shows the principle geometrical structure of the disc 100. As shown in this figure, disc 100 extends between the outer (circular) periphery 105 and the inner (circular) periphery 103. Inner periphery 103 and outer periphery 105 are concentrically arranged relative to the midpoint 104 of the disc 100. A first magnetic pattern 101 and a second magnetic pattern 102 are fixedly formed on a side of the disc 100. The first magnetic pattern 101 includes a number N1 of first portions of spirals 111 which are regularly distributed in a first ring enclosing the first magnetic pattern 101, and the second magnetic pattern 102 includes a number N2 of second portions of spirals 112 which are regularly distributed in a second ring enclosing the second magnetic pattern 102. The first ring and the second ring are concentrically arranged relative to the center point/midpoint 104 of the disc 100. The first ring surrounds the second ring. The number of first portions of spirals 111, N1, is different from the number of second portions of spirals 112, N2. Preferably, the number of first portions of spirals 111 of the first magnetic pattern 101 (i.e. the outer magnetic pattern), N1, is greater than the number of second portions of spirals 112 of the second magnetic pattern 102 (i.e. the inner magnetic pattern), N2. According to the present invention, the numbers N1 and N2 are coprime, wherein the number N1 is different from the numbers N2-1 and N2+1. There is no number, other than 1, that divides both N1 and N2. Specifically for the disc in Fig. 1, N1 is equal to 9, and N2 is equal to 7.

Although not explicitly shown in Fig. 1, each portion of spiral of the first magnetic pattern 101 and the second magnetic pattern 102 shows a nonzero width in the radial direction of the disc 100; and all spirals belonging to the same magnetic pattern have (substantially) the same width in radial direction of the disc 100. In Fig. 1, only a guidance of the spirals is shown, for example, a boundary line of the spiral or the middle of the spiral.

The portions of spirals 111 of the first magnetic pattern 101 are portions of Archimedean spirals according to the equations:

$$R = C_1 (\varphi + \varphi_{0i}), \text{ with } \varphi_{0i} = 360i/N1 \text{ and } i=1, 2, \ldots N1,$$

R and φ are the polar coordinates of the polar coordinate system including the midpoint 114 of the disc 100 as origin, C1 is the pitch of the portion of spirals 111, and $\varphi_{0i}$ is the starting angle of the respective spirals.

Analogous are the portions of spirals 112 of the second magnetic pattern 102 portions of Archimedean spirals according to the equations:

$$R = C_2 (\varphi + \varphi_{0j}), \text{ with } \varphi_{0j} = 360j/N2 \text{ and } j = 1, 2, \ldots N2,$$

C2 being the pitch of the portion of spirals 112 and $\varphi_{0j}$ the starting angle of the respective spirals.

However, it is not mandatory for the present invention that the portions of spirals of the first and/or second magnetic pattern are Archimedean spirals. The present invention is also applicable to an angle sensor using a disc having a magnetic pattern whose portions of spirals have the form of circle involutes.

The portions of spirals (in the following simply denoted as 'spirals') of the first magnetic pattern 101 are magnetized in a direction which is (substantially) parallel with the symmetry/rotational axis of the disc 100. The magnetizations of adjacent spirals of the first magnetic pattern 101 differ by at least a first predetermined amount from each other, so that the magnetic field generated by the spirals 111 of the first magnetic pattern 101 alternates between two different predetermined values, when passing from one spiral to the other, along a direction that is perpendicular to the spirals 111.

Analogous are the portions of spirals 112 of the second magnetic pattern 102 magnetized in a direction which is (substantially) parallel with the axis of the disc 100. The magnetizations of adjacent spirals of the second magnetic pattern 102 differ by at least a second predetermined amount from each other, so that the magnetic field generated by the spirals 112 of the second magnetic pattern 102 alternates between two different predetermined values, when passing from one spiral to the other, along a direction that is perpendicular to the spirals 112.

Preferably, adjacent spirals of the first and/or second magnetic pattern show different magnetic poles. In such a magnetic configuration, the variation of the magnetic field can be detected by the magnetic sensors with high accuracy.

Although in Fig. 1, the disc 100 includes the first magnetic pattern 101 and the second magnetic pattern 102 on the same side of the disc 100, this is not mandatory for the present invention. Moreover, the present invention is also applicable to an analog sensor using a disc having the first magnetic pattern on a side of the disc, and the second magnetic pattern on the other side of the disc.

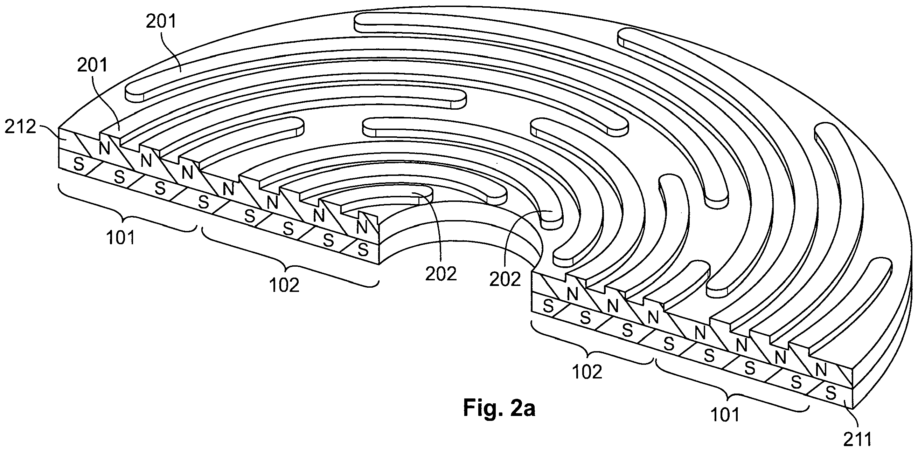

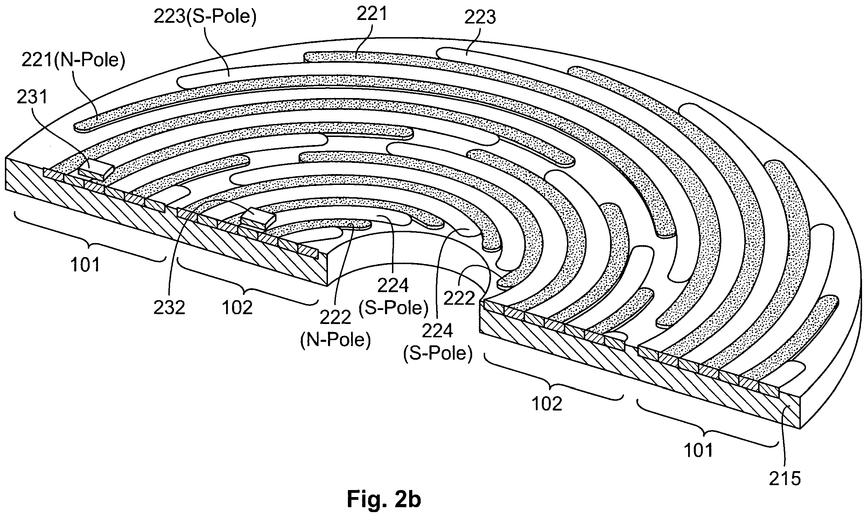

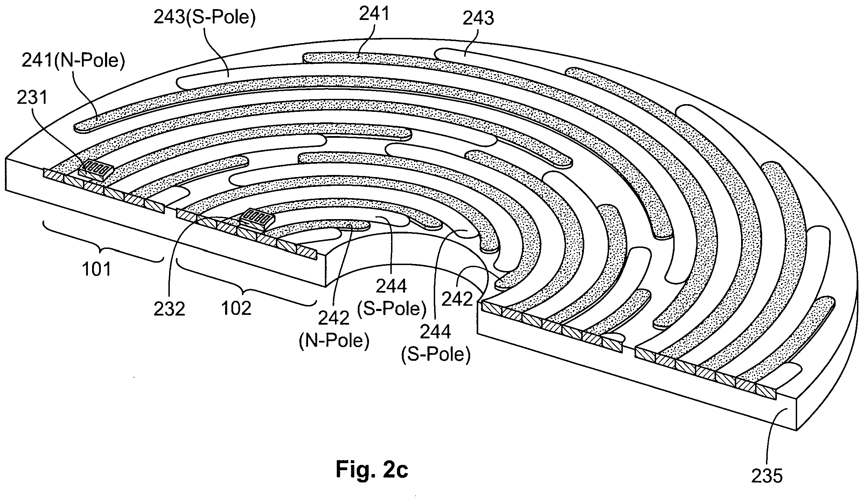

Any of the Figs. 2a, 2b and 2c shows a structure of spirals that can be implemented on the disc used in an angle sensor according to the present invention. The magnetization of the spirals shown in these figures can be achieved by, for instance, a molded form which is being magnetized, bipolar magnetic tracks which are being magnetized by coils, magnetic recording heads or print methods.

The disc shown in Fig. 2a is formed by two magnetized disc halves 211 and 212. Disc half 212 shows protrusions 201 and 202 on one side thereof, whose shape corresponds to Archimedean spirals complying with the above equations or circle involutes. The other side of disc half 212 is combined/bonded with a side of disc half 211, so that the combined disc shows at the upper side (including the protrusions) one magnetic pole (e.g. an N-pole) and at the lower side the other magnetic pole (e.g. the S-pole). Due to this structure, the magnetic field on the upper side of the combined disc, including the protrusions, is modulated/varies in accordance with the (shape of the) protrusions. This means that the magnetic inductance B in regions corresponding to the protrusions differs from the magnetic inductance corresponding to regions between (adjacent) protrusions by a predetermined amount. The protrusions 201 generate the first magnetic pattern 101 and the protrusions 202 generate the second magnetic pattern 102.

In the disc shown in Fig. 2b, the spirals (221 to 224) are formed by magnetized layers (or tracks) which are attached/bonded to one (the upper) side of carrier disc 215. Preferably, the layers/tracks show a (substantially) uniform magnetization. The magnetized layers corresponding to adjacent spirals show different magnetic poles. In Fig 2b 'white spirals' show an S-pole. The shape of the spirals corresponds to Archimedean spirals complying with the above equations or circle involutes. The spirals 221 and 223 form/correspond to the first magnetic pattern 101, and the spirals 222 and 224 form/correspond to the second magnetic pattern 102.

Furthermore, Fig. 2b shows the first magnetic sensor 231 corresponding to the first magnetic pattern 101 and the second magnetic sensor 232 corresponding to the second magnetic pattern 102.

In the disc shown in Fig. 2c, the magnetic layers/tracks forming the spirals 241 to 244, are integrated into one (the upper) side/surface of the carrier disc 235, and do not stick out from the side of the disc. Being integrated in the carrier disc 235, the spirals are protected, and (unwanted) collisions between the spirals and the magnetic sensors do not occur. As in Fig. 2b, the magnetized layers/tracks corresponding to adjacent spirals show different magnetic poles, and the shape of the spirals corresponds to Archimedean spirals complying with the above equations or circle involutes. The spirals 241 and 243 correspond to the first magnetic pattern 101, and the spirals 242 and 244 correspond to the second magnetic pattern 102.

In Figs. 2b and 2c, the spirals corresponding to the first magnetic pattern 101 have all the same width, irrespective of their magnetization. Analogous the spirals corresponding to the second magnetic pattern 102 all have the same width, irrespective of their magnetization. Preferably, both the spirals corresponding to the first magnetic pattern 101 and the spirals corresponding to the second magnetic pattern 102 have all the same width, irrespective of their magnetization.

Furthermore, Figs. 2b and 2c show that adjacent spirals of the first magnetic pattern 101 are directly adjacent to each other, and adjacent spirals of the second magnetic pattern 102 are directly adjacent to each other. This means that no non-magnetized region exists between two adjacent spirals.

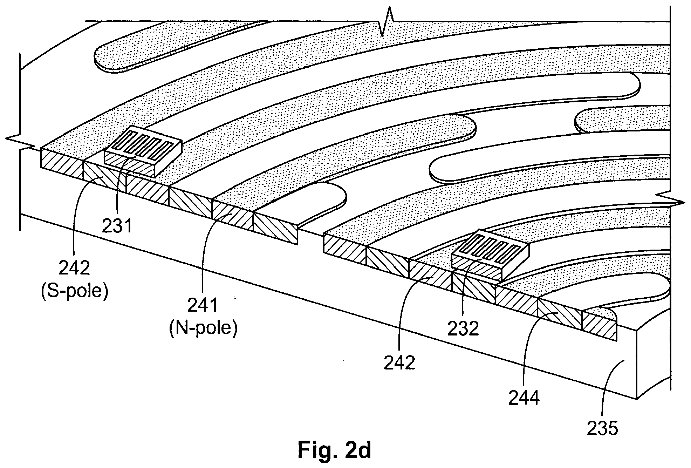

Fig. 2d shows an enlarged view of the section of Fig. 2c including the first magnetic sensor 231 and the second magnetic sensor 232. Preferably, these magnetic sensors are anisotropic magneto-resistive bridges (AMR-bridges). The first magnetic sensor 231 corresponds to the first magnetic pattern, and is arranged near/relative to the spirals of the first magnetic pattern, so as to detect N1 complete rotations of the magnetic inductance vector over a full mechanical rotation of the disc including the first magnetic pattern, wherein N1 is the number of spirals forming the first magnetic pattern. Analogous the second magnetic sensor 232 corresponds to the second magnetic pattern, and is arranged near/relative to the spirals of the second magnetic pattern, so as to detect N2 complete rotations of the magnetic inductance vector over a full mechanical rotation of the disc including the (first and) second magnetic pattern, wherein N2 is the number of spirals forming the second magnetic pattern.

In other words, a magnetic pattern and its associated magnetic sensor are arranged in such a way that, during a full mechanical revolution of the disc, the magnetic sensor passes (over) each spiral of the respective magnetic pattern.

Each of the first and second magnetic sensors is adapted to output a cos-signal and a sin-signal in response to the detected magnetic inductance. Each of the cos-signal and the sin-signal contains a number of periods corresponding to the number of rotations of the magnetic inductance detected by the respective magnetic sensor.

Furthermore, the angle sensor according to the present invention comprises a processing unit (not shown in the figures), e.g. a digital signal processor (DSP), adapted to determine a first arctan-signal based on the cos- and sin-signal output by the first magnetic sensor 231, to determine a second arctan-signal based on the cos- and sin-signal output by the second magnetic sensor 232, and to determine a signal corresponding to the absolute angular position of the disc based on the first and second arctan-signal. As the numbers N1 and N2 are coprime, the absolute angular position of the disc is uniquely determined by this signal.

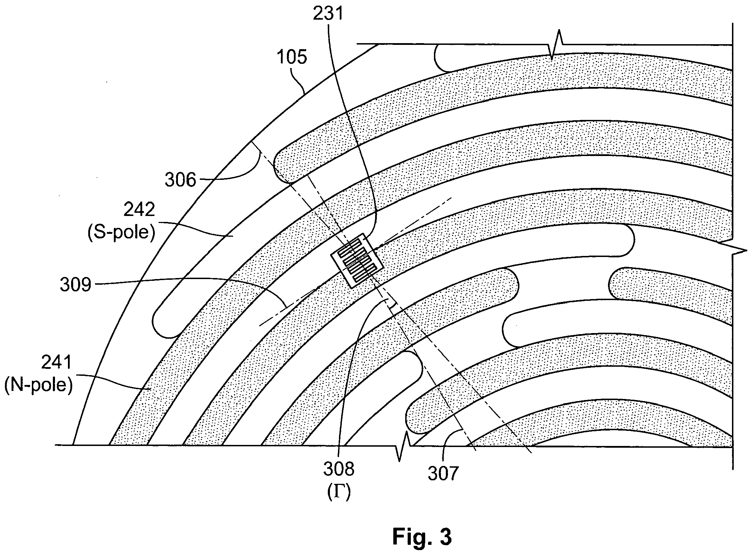

Fig. 3 shows the orientation of the four magneto-resistive layers of the magneto-resistive bridge 231 relative to the radius of the disc 100 used in an angle sensor according to the present invention. This figure shows that the four magneto-resistive layers of the magneto-resistive bridge 231 are aligned in a direction 307 that is perpendicular to the tangent 309 of any spiral of the respective magnetic pattern, thereby forming an angle $\Gamma$ with the radius of the disc 100. The angle $\Gamma$, having the reference numeral 308, is given by the following formula:

$$\Gamma = \arctan (R/C),$$

R is the radial position of the bridge 231 relative to the origin 104 of the disc 100, and C is the pitch of the respective spiral.

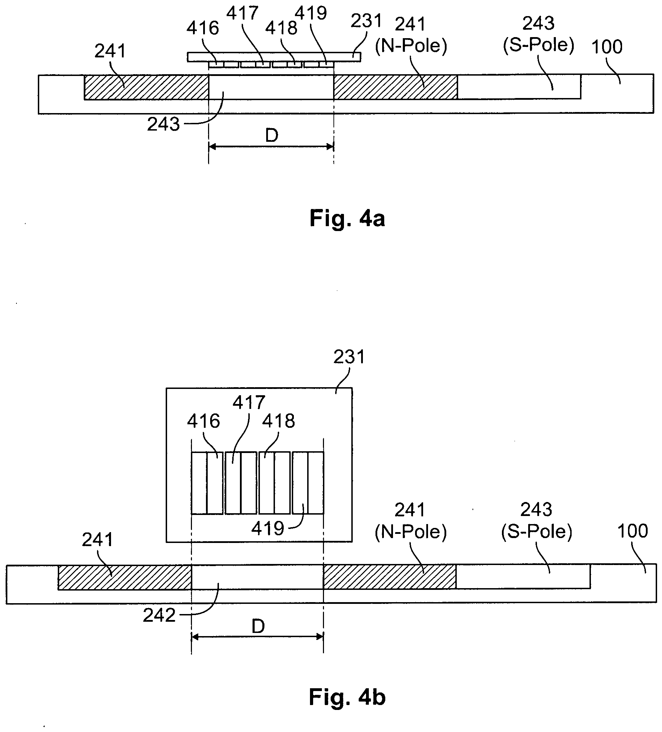

Each of the AMR-bridges 231 and 232 shown in Figs. 2b and 2c includes four magneto-resistive structures/layers 416 to 419. Figs. 4a and 4b show the arrangement of these four magneto-resistive layers relative to the spirals of the magnetic pattern of the disc 100. The magneto-resistive layers 416 and 418 are adapted to generate the cos-signal and the magneto-resistive layers 417 and 419 are adapted to generate the sin-signal, in response to the detected magnetic field.

Fig. 4a shows a cross section of the disc 100 and of the AMR-bridge 231 along a line that is perpendicular to the tangent of the spiral 243. According to the arrangement shown in this figure, the AMR-bridge 231 is arranged in such a way that a plane, including the surfaces of the four magneto-resistive layers 416 to 419, is parallel to the disc 100. Also, this figure shows that the width D of the AMR-bridge 231, which is essentially determined by the extent of the four magneto-resistive layers 416 to 419, matches the width of any of the spirals 241 to 243. The width of a spiral of a magnetic pattern is also denoted as a pole pitch.

Fig. 4b shows a cross section of the disc 100 along a line that is perpendicular to the tangent of the spiral 243, in a plane including the four magneto-resistive layers 416 to 419. According to the arrangement shown in this figure, the AMR-bridge 231 is arranged in such a way that a plane, including the surfaces of the four magneto-resistive layers 416 to 419, is perpendicular to the disc 100. Also, Fig. 4b shows that the four magneto-resistive layers 416 to 419 are aligned in a direction that is perpendicular to the tangent of any of the spirals, and that the width D of the AMR-bridge 231 is equal to the width of any of the spirals 241 to 243.

The arrangements shown in Figs. 4a and 4b are particularly advantageous, because they are immune to external magnetic stray fields.

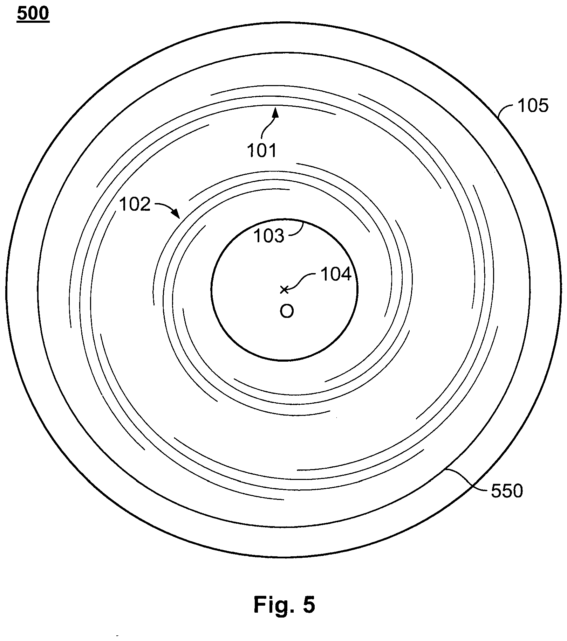

Fig. 5 shows the principle geometrical structure of a disc 500 used in an angle sensor according to a second embodiment of the present invention. Disk 500 differs from the disk 100 of the first embodiment in that it further comprises a circular magnetic structure 550 on the side of the disc 500 including the first magnetic pattern 101 and the second magnetic pattern 102. The circular magnetic structure 550 has a circular magnetization, is concentrically arranged around the midpoint/center point 104 of the disc 500, and surrounds the first magnetic pattern 101 and the second magnetic pattern 102. N1 is the number of spirals of the first magnetic pattern 101 and N2 is the number of spirals of the second magnetic pattern 102. In the second embodiment of the present invention, the numbers N1 and N2 are coprime, wherein the number N1 is different from the numbers N2-1 and N2+1. Specifically for the disc in Fig. 5, N1 is equal to 9, and N2 is equal to 7

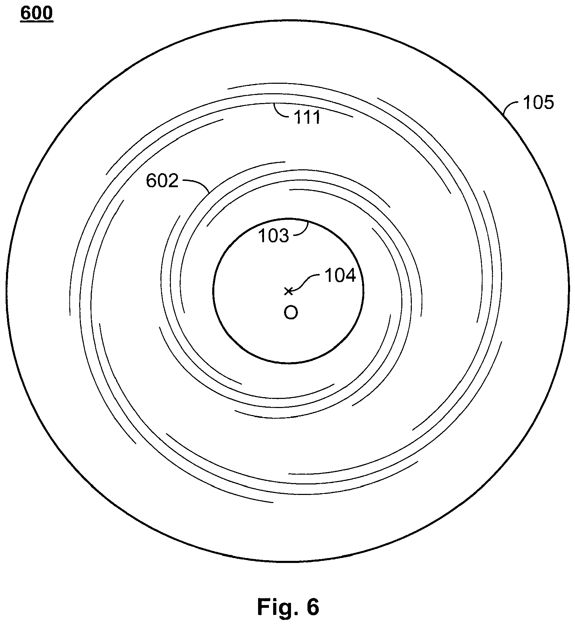

An angle sensor according to a second embodiment of the present invention further comprises a third magnetic sensor (not shown in Fig. 6) for sensing the magnetic field generated by the circular magnetic structure 550. By sensing the magnetic field of the circular magnetic structure 550, the second embodiment is able to determine the position of the circular magnetic structure 550, so as to perform eccentricity error corrections.

Fig. 6 shows the principle geometrical structure of a disc 600 used in an angle sensor according to a third embodiment of the present invention. Disc 600 differs from the disk 100 of the first embodiment in that the spirals 602 of the inner magnetic pattern rotate in a direction that is opposite to the rotation direction of the spirals 111 of the outer magnetic pattern. N1 is the number of spirals 111 of the outer magnetic pattern and N2 is the number of spirals 602 of the inner magnetic pattern. Also, in the third embodiment of the present invention, the numbers N1 and N2 are coprime, wherein the number N1 is different from the numbers N2-1 and N2+1. Specifically for the disc in Fig. 6, N1 is equal to 9, and N2 is equal to 7.

Any of the structures of spirals shown in Figs. 2a, 2b and 2c can be implemented on a disc of an angle sensor according to the second and third embodiment of the present invention.

The angular sensor according to the present invention is applicable, for instance, in motor feedback systems, in landing airbrakes, in starter generators, in electrical engines, and in steer angles.

**Reference Numerals**

| Reference Numerals | Description |
| --- | --- |
| 100, 500, 600 | Disc |
| 101 | First magnetic pattern |
| 102 | Second magnetic pattern |
| 103 | Inner perimeter |
| 104 | Centre (midpoint) |
| 105 | Outer perimeter |
| 111 | First portions of spirals (center line thereof) |
| 112 | Second portions of spirals (center line thereof) |
| 201 | First protrusions |
| 202 | Second protrusions |
| 211 | Lower disc component |
| 212 | Upper disc component |
| 215, 235 | Carrier disc |
| 221,222 | Magnetized portions of spirals, N-poles, deposited on a side of the carrier disc |
| 223,224 | Magnetized portions of spirals, S-poles, deposited on a side of the carrier disc |
| 241,242 | Magnetized portions of spirals, N-poles, integrated on a side of the carrier disc |
| 242,244 | Magnetized portions of spirals, S-poles, integrated on a side of the carrier disc |
| 231, 232 | First and second magnetic sensor (AMR-bridge) |
| 306 | Radius of disc |
| 307 | Perpendicular line to the tangent of a spiral |
| 308 | Angle $\Gamma$ between perpendicular to spiral and radius of disc |

(continued)

| Reference Numerals | Description |
| --- | --- |
| 309 | Tangent to a spiral of a magnetic pattern |
| 416, 418 | Magneto-resistive layers/structures of the AMR-bridge yielding a Sin-signal |
| 417, 419 | Magneto-resistive layers/structures of the AMR-bridge yielding a Cos-signal |

**Claims**

1. Angle sensor including two scannable magnetic patterns (101, 102) on a side of a disc (100) and two magnetic sensors (231, 232),
   wherein the two magnetic sensors (231, 232) are fixedly arranged relative to each other, the disk (100) and the two magnetic sensors (231, 232) are rotatable relative to each other, around the rotations axis of the disk,
   the first magnetic sensor (231) of the two sensors being associated to the first magnetic pattern (101), and is adapted to output a first electric signal when the first magnetic pattern (101) and the first magnetic sensor (231) rotate relative to each other,
   the second magnetic sensor (232) of the two sensors being associated to the second magnetic pattern (102), and is adapted to output a second electric signal when the second magnetic pattern (102) and the second magnetic sensor (232) rotate relative to each other,
   the first magnetic pattern (101) includes a number N1 of first portions of spirals (111) which are regularly distributed in a first ring,
   the second magnetic pattern (102) includes a number N2 of second portions of spirals (112) which are regularly distributed in a second ring,
   wherein the radius of a spiral portion is a function of the polar angle in a polar coordinate system including the centre point of the disc as origin, the first ring and the second ring being concentrically arranged around the center point (104) of the disc (100),
   N1 is different from N2,
   **characterized in that**
   N1 is different from N2-1, N1 is different from N2+1,
   N1 and N2 are coprime,
   the first magnetic sensor (231) includes a first magneto-resistive bridge having four magneto-resistive structures/layers (416 to 419) along the width direction of a spiral (243) of the first magnetic pattern (101), arranged in such a way that the width (D) of the first magneto-resistive bridge matches the width of a spiral (243) of the first magnetic pattern (101), wherein the spirals (221, 223) of the first magnetic pattern have all the same width, preferably the width (D) of the first magneto-resistive bridge is equal to the width of a spiral (243) of the first magnetic pattern (101), and/or
   the second magnetic sensor (232) includes a second magneto-resistive bridge having other four magneto-resistive structures/layers along the width direction of a spiral (244) of the second magnetic pattern (102), arranged in such a way that the width of the second magneto-resistive bridge matches the width of a spiral (244) of the second magnetic pattern (102), wherein the spirals (222, 224) of the second magnetic pattern have all the same width, preferably the width of the second magneto-resistive bridge is equal to the width of a spiral (244) of the second magnetic pattern (102): preferably the first magneto-resistive bridge and the second magneto-resistive bridge are anisotropic magneto-resistive, AMR, bridges.

2. Angle sensor according to claim 1, wherein the spirals of the first magnetic pattern (101) and/or the spirals of the second magnetic pattern (102) are magnetized in a direction which is substantially parallel with the rotational axis of the disc (100),
   the magnetizations of adjacent spirals of the first magnetic pattern (101) differ by at least a first predetermined amount from each other, and/or
   the magnetizations of adjacent spirals of the second magnetic pattern (102) differ by at least a second predetermined amount from each other.

3. Angle sensor according to claim 2, wherein adjacent spirals (221, 223) of the first magnetic pattern (101) show different magnetic poles, and/or
   adjacent spirals (222, 224) of the second magnetic (102) pattern show different magnetic poles.

4. Angle sensor according to any of claims 2 or 3, wherein adjacent spirals (221, 223) of the first magnetic pattern (101) are directly adjacent to each other, and/or adjacent spirals (222, 224) of the second magnetic pattern (102) are directly adjacent to each other.

5. Angle sensor according to any of claims 1 to 4, wherein the second ring is arranged in the interior of the first ring, and N1 is greater than N2, preferably N1=7 and N2=5.

6. Angle sensor according to any of claims 1 to 5, wherein the first portions of spirals (111, 221, 223) and the second portions of spirals (112, 222, 224) are Archimedean spirals.

7. Angle sensor according to any of claims 1 to 6, wherein the first portions of spirals (111) and the second portions of spirals (112) rotate in the same direction.

8. Angle sensor according to any of claims 1 to 6 wherein the first portions of spirals (111) and the second portions of spirals (602) rotate in the opposite direction.

9. Angle sensor according to any of claims 1 to 8, further comprising a circular magnetic structure (550) on the side of the disc (500), being concentrically arranged around the center point (104) of the disc (500), preferably surrounding the first and second ring; and a third magnetic sensor for sensing the magnetic field generated by the circular magnetic structure (550).


**Patentansprüche**

1. Winkelsensor mit zwei abtastbaren magnetischen Strukturen (101, 102) auf einer Seite einer Scheibe (100) und zwei magnetischen Sensoren (231, 232), wobei
die zwei magnetischen Sensoren (231, 232) relativ zueinander fixiert angeordnet sind, und die Scheibe (100) und die zwei magnetischen Sensoren (231, 232) um die Drehachse der Scheibe relativ zueinander drehbar sind,
der erste magnetische Sensor (231) der zwei Sensoren der ersten magnetischen Struktur (101) zugeordnet und ausgebildet ist, ein erstes elektrisches Signal auszugeben, wenn die erste magnetische Struktur (101) und der erste magnetische Sensor (231) sich relativ zueinander drehen,
der zweite magnetische Sensor (232) der zwei Sensoren der zweiten magnetischen Struktur (102) zugeordnet und ausgebildet ist, ein zweites elektrisches Signal auszugeben, wenn sich die zweite magnetische Struktur (102) und der zweite magnetische Sensor (232) relativ zueinander drehen,
die erste magnetische Struktur (101) eine Anzahl N1 an ersten Bereichen von Spiralen (111) enthält, die regelmäßig in einem ersten Ring verteilt sind,
die zweite magnetische Struktur (102) eine Anzahl N2 an zweiten Bereichen von Spiralen (112) enthält, die regelmäßig in einem zweiten Ring angeordnet sind,
der Radius eines Spiralbereichs von einem Polarwinkel in einem Polarkoordinatensystem, das den Mittelpunkt der Scheibe als Ursprung enthält, abhängt,
der erste Ring und der zweite Ring konzentrisch um den Mittelpunkt (104) der Scheibe (100) angeordnet sind,
N1 sich von N2 unterscheidet,
**dadurch gekennzeichnet, dass**
N1 sich von N2-1 unterscheidet, N1 sich von N2+1 unterscheidet, N1 und N2 teilerfremd sind,
der erste magnetische Sensor (231) eine erste magnetresistive Brücke mit vier magnetresistiven Strukturen/Schichten (416 bis 419) entlang der Breitenrichtung einer Spirale (243) der ersten magnetischen Struktur (101) aufweist, wobei die Anordnung so ist, dass die Breite (D) der ersten magnetresistiven Brücke mit der Breite einer Spirale (243) der ersten magnetischen Struktur (101) übereinstimmt, wobei die Spiralen (221, 223) der ersten magnetischen Struktur jeweils die gleiche Breite haben,
vorzugsweise die Breite (D) der ersten magnetresistiven Brücke gleich der Breite einer Spirale (243) der ersten magnetischen Struktur (101) ist, und/oder
der zweite magnetische Sensor (232) eine zweite magnetresistive Brücke mit vier anderen magnetresistiven Strukturen/Schichten entlang der Breitenrichtung einer Spirale (244) der zweiten magnetischen Struktur (102) enthält, wobei die Anordnung so ist, dass die Breite der zweiten magnetresistiven Brücke mit der Breite einer Spirale (244) der zweiten magnetischen Struktur (102) übereinstimmt, wobei die Spiralen (222, 224) der zweiten magnetischen Struktur jeweils die gleiche Breite haben,
vorzugsweise die Breite der zweiten magnetresistiven Brücke gleich der Breite einer Spirale (244) der zweiten magnetischen Struktur (102) ist;

vorzugsweise die erste magnetresisitive Brücke und die zweite magnetresistive Brücke anisotrope magnetresistive, AMR-, Brücken sind.

2.  Winkelsensor nach Anspruch 1, wobei die Spiralen der ersten magnetischen Struktur (101) und/oder die Spiralen der zweiten magnetischen Struktur (102) in einer Richtung magnetisiert sind, die im Wesentlichen parallel zu der Drehachse der Scheibe (100) ist,
    die Magnetisierungen benachbarter Spiralen der ersten magnetischen Struktur (101) sich um mindestens einen vorbestimmten Betrag voneinander unterscheiden, und/oder
    die Magnetisierungen benachbarter Spiralen der zweiten magnetischen Struktur (102) sich um mindestens einen zweiten vorbestimmten Betrag voneinander unterscheiden.

3.  Winkelsensor nach Anspruch 2, wobei benachbarte Spiralen (221, 223) der ersten magnetischen Struktur (101) unterschiedliche magnetische Pole zeigen, und/oder
    benachbarte Spiralen (222, 224) der zweiten magnetischen Struktur (102) unterschiedliche magnetische Pole zeigen.

4.  Winkelsensor nach Anspruch 2 oder 3, wobei benachbarte Spiralen (221, 223) der ersten magnetischen Struktur (101) direkt zueinander benachbart sind, und/oder
    benachbarte Spiralen (222, 224) der zweiten magnetischen Struktur (102) direkt zueinander benachbart sind.

5.  Winkelsensor nach einem der Ansprüche 1 bis 4, wobei der zweite Ring im Inneren des ersten Rings angeordnet ist und N1 größer ist als N2, wobei vorzugsweise gilt: N1 = 7 und N2 = 5.

6.  Winkelsensor nach einem der Ansprüche 1 bis 5, wobei die ersten Bereiche von Spiralen (111, 221, 223) und die zweiten Bereiche von Spiralen (112, 222, 224) archimedische Spiralen sind.

7.  Winkelsensor nach einem der Ansprüche 1 bis 6, wobei die ersten Bereiche von Spiralen (111) und die zweiten Bereiche von Spiralen (112) sich in der gleichen Richtung drehen.

8.  Winkelsensor nach einem der Ansprüche 1 bis 6, wobei die ersten Bereiche von Spiralen (111) und die zweiten Bereiche von Spiralen (602) sich in entgegengesetzten Richtungen drehen.

9.  Winkelsensor nach einem der Ansprüche 1 bis 8, der ferner eine kreisförmige magnetische Struktur (550) auf der Seite der Scheibe (500) aufweist, die konzentrisch um den Mittelpunkt (104) der Scheibe (500) herum angeordnet ist, die vorzugsweise den ersten und den zweiten Ring umgibt; und
    ferner einen dritten magnetischen Sensor zur Erfassung des magnetischen Feldes aufweist, das durch die kreisförmige magnetische Struktur (550) erzeugt wird.

**Revendications**

1.  Capteur d'angle incluant deux motifs magnétiques analysables (101, 102) sur un côté d'un disque (100) et deux capteurs magnétiques (231, 232),
    dans lequel les deux capteurs magnétiques (231, 232) sont disposés de manière fixe l'un par rapport à l'autre, le disque (100) et les deux capteurs magnétiques (231, 232) sont mobiles en rotation l'un par rapport à l'autre, autour des axes de rotation du disque,
    le premier capteur magnétique (231) des deux capteurs étant associé au premier motif magnétique (101), et est adapté pour générer un premier signal électrique lorsque le premier motif magnétique (101) et le premier capteur magnétique (231) tournent l'un par rapport à l'autre,
    le deuxième capteur magnétique (232) des deux capteurs étant associé au deuxième motif magnétique (102), et est adapté pour générer un deuxième signal électrique lorsque le deuxième motif magnétique (102) et le deuxième capteur magnétique (232) tournent l'un par rapport à l'autre,
    le premier motif magnétique (101) inclut un nombre N1 de premières parties de spirales (111) qui sont régulièrement réparties dans un premier anneau,
    le deuxième motif magnétique (102) inclut un nombre N2 de deuxièmes parties de spirales (112) qui sont régulièrement réparties dans un deuxième anneau,
    dans lequel le rayon d'une partie de spirale est une fonction de l'angle polaire dans un système de coordonnées polaires incluant le point central du disque en tant qu'origine,

le premier anneau et le deuxième anneau étant disposés concentriquement autour du point central (104) du disque (100),

N1 est différent de N2,

**caractérisé en ce que**

N1 est différent de N2-1,

N1 est différent de N2+1,

N1 et N2 sont coprimes,

le premier capteur magnétique (231) inclut un premier pont magnétorésistif présentant quatre structures/couches magnétorésistives (416 à 419) le long de la direction de largeur d'une spirale (243) du premier motif magnétique (101), disposé de telle sorte que la largeur (D) du premier pont magnétorésistif corresponde à la largeur d'une spirale (243) du premier motif magnétique (101), dans lequel les spirales (221, 223) du premier motif magnétique présentent toutes la même largeur, de préférence la largeur (D) du premier pont magnétorésistif est égale à la largeur d'une spirale (243) du premier motif magnétique (101), et/ou

le deuxième capteur magnétique (232) inclut un deuxième pont magnétorésistif présentant quatre autres structures/couches magnétorésistives le long de la direction de largeur d'une spirale (244) du deuxième motif magnétique (102), disposé de telle sorte que la largeur du deuxième pont magnétorésistif corresponde à la largeur d'une spirale (244) du deuxième motif magnétique (102),

dans lequel les spirales (222, 224) du deuxième motif magnétique présentent toutes la même largeur, de préférence la largeur du deuxième pont magnétorésistif est égale à la largeur d'une spirale (244) du deuxième motif magnétique (102) ;

de préférence le premier pont magnétorésistif et le deuxième pont magnétorésistif sont des ponts magnétorésistifs anisotropes, AMR (Anisotropic Magneto-Resistive).

2. Le capteur d'angle selon la revendication 1, dans lequel les spirales du premier motif magnétique (101) et/ou les spirales du deuxième motif magnétique (102) sont magnétisées dans une direction qui est substantiellement parallèle à l'axe de rotation du disque (100),

les magnétisations de spirales adjacentes du premier motif magnétique (101) diffèrent d'au moins une première quantité prédéterminée l'une de l'autre, et/ou les magnétisations de spirales adjacentes du deuxième motif magnétique (102) diffèrent d'au moins une deuxième quantité prédéterminée l'une de l'autre.

3. Le capteur d'angle selon la revendication 2, dans lequel des spirales adjacentes (221, 223) du premier motif magnétique (101) présentent des pôles magnétiques différents, et/ou

des spirales adjacentes (222, 224) du deuxième motif magnétique (102) présentent des pôles magnétiques différents.

4. Le capteur d'angle selon l'une quelconque de la revendication 2 ou 3, dans lequel des spirales adjacentes (221, 223) du premier motif magnétique (101) sont directement adjacentes l'une à l'autre, et/ou

des spirales adjacentes (222, 224) du deuxième motif magnétique (102) sont directement adjacentes l'une à l'autre.

5. Le capteur d'angle selon l'une quelconque des revendications 1 à 4, dans lequel le deuxième anneau est disposé à l'intérieur du premier anneau, et N1 est supérieur à N2, de préférence N1=7 et N2=5.

6. Le capteur d'angle selon l'une quelconque des revendications 1 à 5, dans lequel les premières parties de spirales (111, 221, 223) et les deuxièmes parties de spirales (112, 222, 224) sont des spirales d'Archimède.

7. Le capteur d'angle selon l'une quelconque des revendications 1 à 6, dans lequel les premières parties de spirales (111) et les deuxièmes parties de spirales (112) tournent dans le même sens.

8. Le capteur d'angle selon l'une quelconque des revendications 1 à 6, dans lequel les premières parties de spirales (111) et les deuxièmes parties de spirales (602) tournent dans le sens opposé.

9. Le capteur d'angle selon l'une quelconque des revendications 1 à 8, comprenant en outre une structure magnétique circulaire (550) sur le côté du disque (500), étant concentriquement disposée autour du point central (104) du disque (500), de préférence entourant les premier et deuxième anneaux ; et

un troisième capteur magnétique pour détecter le champ magnétique généré par la structure magnétique circulaire (550).

**100**

**Fig. 1**

**Fig. 2a**

Fig. 2b

Fig. 2c

**Fig. 2d**

**Fig. 3**

**Fig. 4a**

**Fig. 4b**

**500**

Fig. 5

**Fig. 6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014131434 A
- DE 102008008377 B3
- EP 2302333 A2
- DE 10038296 A1
- DE 102005042616 A1